# EUROPEAN PATENT APPLICATION

(11) **EP 1 728 844 A1**
(43) Date of publication of application: **06.12.2006**
(21) Application number: 06252564.7
(22) Date of filing: 17.05.2006
(51) Int. Cl.: C10G 3/00, C10L 1/08, C11B 3/04

(54) **Production of diesel fuel from biorenewable feedstocks**

(30) Priority: 19.05.2005 US 682679 P
(71) Applicant: UOP LLC, Des Plaines, IL 60017-5017 (US)
(72) Inventor: Petri, John Anthony, c/o UOP LLC, Des Plaines Illinois 60017-5017 (US); Marker, Terry Louise, c/o UOP LLC, Des Plaines Illinois 60017-5017 (US)
(74) Representative: Chung, Hsu Min

(57) **Abstract**

A process has been developed for producing diesel fuel from biorenewable feedstocks such as plant oils and greases. The process involves a pretreatment step to remove contaminants such as alkali metals from the feedstock. Next the treated feedstock is hydrogenated and deoxygenated, i.e. decarboxylated and/or hydrodeoxygenated to provide a hydrocarbon fraction useful as a diesel fuel. If desired, the hydrocarbon fraction can be isomerized to improve cold flow properties.

## Description

### BACKGROUND OF THE INVENTION

As the demand for diesel fuel increases worldwide there is increasing interest in sources other than crude oil for producing diesel fuel. One such source is what has been termed biorenewable sources. These sources include plant oils such as corn, rapeseed, canola and soybean oils and greases such as inedible tallow, yellow and brown greases. The common feature of these sources is that they are composed of triglycerides and Free Fatty Acids (FFA). Both of these compounds contain n-paraffin chains having 10 to 20 carbon atoms. The n-paraffin chains in the tri-glycerides or FFAs can also be mono, di or polyunsaturated.

There are reports in the art disclosing the production of hydrocarbons from oils. For example, US 4,300,009 discloses the use of crystalline aluminosilicate zeolites to convert plant oils such as corn oil to hydrocarbons such as gasoline and chemicals such as paraxylene. US 4,992,605 discloses the production of hydrocarbon products in the diesel boiling range by hydroprocessing vegetable oils such as canola or sunflower oil. Finally, US 2004/0230085 A1 discloses a process for treating a hydrocarbon component of biological origin by hydrodeoxygenation followed by isomerization.

Applicants have developed a process which comprises a pretreatment step, and one or more steps to hydrogenate, decarboxylate (and/or hydrodeoxygenate) and optionally hydroisomerize the feedstock. The pretreatment step removes contaminants that can poison the downstream catalysts.

### SUMMARY OF THE INVENTION

A process for producing a hydrocarbon fraction useful as a diesel fuel from a biorenewable feedstock comprising pre-treating the feedstock in a pretreatment zone at pretreatment conditions to remove at least a portion of contaminants in the feedstock and produce a first effluent stream; treating the first effluent stream in a reaction zone by hydrogenating and deoxygenating the first effluent stream at reaction conditions to provide a reaction product comprising a hydrocarbon fraction comprising n-paraffins useful as a diesel fuel.

This and other objects and embodiments will become clearer after the following detailed description of the invention.

### DETAILED DESCRIPTION OF THE INVENTION

As stated the present invention relates to a process for producing a hydrocarbon stream useful as diesel fuel from biorenewable feedstocks. The biorenewable feedstocks that can be used in the present invention include any of those which comprise primarily triglycerides and free fatty acids (FFA). Examples of these feedstocks include but are not limited to canola oil, corn oil, soy oils, inedible tallow, yellow and brown greases, etc. As further stated the tri-glycerides and FFAs contain aliphatic hydrocarbon chains in their structure having 10 to 20 carbons. Another example of a bio-renewable feedstock that can be used in the present invention is tall oil. Tall oil is a by-product of the wood processing industry. Tall oil contains esters and rosin acids in addition to FFAs. Rosin acids are cyclic carboxylic acids. However, these biorenewable feedstocks also contain contaminants such as alkali metals, e.g. sodium and potassium, phosphorous as well as solids, water and detergents.

Accordingly, the first step in the present invention is to remove as much of these contaminants as possible. One pretreatment step involves contacting the biorenewable feedstock with an ion-exchange resin in a pretreatment zone at pretreatment conditions. The ion-exchange resin is an acidic ion exchange resin such as Amberlyst™-15 and can be used as a bed in a reactor through which the feedstock is flowed through, either upflow or downflow. The conditions at which the reactor is operated are well known in the art.

Another means for removing contaminants is a mild acid wash. This is carried out by contacting the feedstock with an acid such as sulfuric, nitric or hydrochloric acid in a reactor. The acid and feedstock can be contacted either in a batch or continuous process. Contacting is done with a dilute acid solution usually at ambient temperature and atmospheric pressure. If the contacting is done in a continuous manner, it is usually done in a counter current manner.

Yet another means of removing metal contaminants from the feedstock is through the use of guard beds which are well known in the art. These can include alumina guard beds either with or without demetallation catalysts such as nickel or cobalt.

The purified feedstock from the pretreatment zone, herein referred to as a first effluent stream, is now flowed to a reaction zone comprising one or more catalyst beds in one or more reactor. In the reaction zone the first effluent stream is contacted with a hydrogenation catalyst in the presence of hydrogen at hydrogenation conditions to hydrogenate the olefinic or unsaturated portions of the n-paraffinic chains. Hydrogenation catalysts are any of those well known in the art such as nickel or nickel/molybdenum dispersed on a high surface area support. Other hydrogenation catalyst include a noble metal catalytic element dispersed on a high surface area support. Non-limiting examples of noble metals include Pt and/or Pd dispersed on gamma-alumina. Hydrogenation conditions include a temperature of 200°C to 300°C and a hydrogen partial pressure of 3447 kPa to 6895 kPa. Other operating conditions for the hydrogenation zone are well known in the art.

The hydrogenation catalysts enumerated above are also capable of catalyzing decarboxylation and/or hydrodeoxygenation of the first effluent stream to remove oxygen. Decarboxylation and hydrogenation are herein collectively referred to as deoxygenation reactions. Decarboxylation conditions include a relatively low hydrogen partial pressure of 3447 kPa to 6895 kPa, a temperature of 288°C to 345°C and a liquid hourly space velocity of 1 to 4 hr⁻¹. Since hydrogenation is an exothermic reaction, as the first effluent flows through the catalyst bed, decarboxylation and hydrodeoxygenation will begin to occur. Thus, it is envisioned and is within the scope of this invention that all three reactions occur simultaneously in one bed or the conditions can be controlled such that hydrogenation primarily occurs in one bed and decarboxylation and/or hydrodeoxygenation occurs in a second bed. Of course if only one bed is used, then hydrogenation occurs primarily at the front of the bed, while decarboxylation/hydrodeoxygenation occurs mainly in the middle and bottom of the bed. Finally, if desired hydrogenation can be carried out in one reactor, while decarboxylation and/or hydrodeoxygenation can be carried out in a separate reactor. It is preferred to carry out all three reactions in one reactor.

The reaction product from the decarboxylation/hydrodeoxygenation reactions will comprise a liquid portion and a gaseous portion. The liquid portion comprises a hydrocarbon fraction which is essentially all n-paraffins and have a cetane number of 100. Although this hydrocarbon fraction is useful as a diesel fuel, because it comprises essentially all n-paraffins, it will have poor cold flow properties. If it is desired to improve the cold flow properties of the liquid hydrocarbon fraction, then the entire reaction product can be contacted with an isomerization catalyst under isomerization conditions to at least partially isomerize the n-paraffins to isoparaffins. Catalysts and conditions for isomerization are well known in the art. See for example US 2004/0230085 A1 which is incorporated by reference. Isomerization can be carried out in a separate bed of the same reaction zone, i.e. same reactor, described above or it can be carried out in a separate reactor.

Whether isomerization is carried out or not, the final effluent stream, i.e. the stream obtained after all reactions have been carried out, is now processed through one or more separation steps to obtain a purified hydrocarbon stream useful as a diesel fuel. As stated above, the final effluent stream comprises a liquid and a gaseous component. The liquid and gaseous components are separated using a high-pressure separator well known in the art. The gaseous component comprises mostly hydrogen and the carbon dioxide from the decarboxylation reaction which can be removed by means well known in the art such as absorption with an amine, reaction with a hot carbonate solution, pressure swing absorption, etc. If desired, essentially pure carbon dioxide can be recovered by regenerating the spent absorption media.

Finally, a portion of the purified hydrocarbon stream and/or the carbon dioxide free gaseous stream can be recycled to the inlet of the reaction zone where hydrogenation primarily occurs and/or to any subsequent beds/reactors to control the temperature rise across the individual beds.

The following examples are presented in illustration of this invention and are not intended as undue limitations on the generally broad scope of the invention as set out in the appended claims.

### EXAMPLE 1

Several experiments were conducted to test hydrogenation/decarboxylation catalysts both in a batch mode and a continuous mode. The feeds used where either a soybean oil feed (Aldrich) or a crude tall oil feed (Weyerhauser) and the catalysts were obtained from UOP LLC. Table 1 presents the results from these experiments.

**Table 1**

| Treatment of Bio-Oils under Various Conditions | | | | | |
|---|---|---|---|---|---|
| Feed | Soybean Oil | Soybean Oil | Crude Tall Oil | Soybean Oil | Soybean Oil |
| Catalyst | NiMo | CoMo | NiMo | NiMo | NiMo |
| Test unit | Autoclave | Autoclave | Autoclave | Continuous | Continuous |
| WHSV (hr⁻¹) | 1.9 | 1.7 | 2.3 | 0.8 | 0.3 |
| Temperature (°C) | 300-350 | 300-350 | 300-350 | 325 | 310 |
| H₂ Pressure (kPa) | 3447 | 3447 | 3447 | 3447 | 3447 |
| Products | | | | | |
| % water | 1.7 | 1.2 | 2.9 | 5.2 | 10.4 |
| % C02+C0 | 12.7 | 13.4 | 15.2 | 2.7 | 2.0 |
| % light HC¹ | 7.0 | 5.2 | 5.8 | 2.8 | 3.1 |
| % diesel+ | 79 | 80 | 76 | 98 | 90 |
| % heavy² | 0 | 3.2 | 7.6 | 0.6 | 0.4 |
| % deoxygenation | 90+ | 91+ | 96 | 85 | 99 |

| | | | | | |
|---|---|---|---|---|---|
| ¹ light hydrocarbons are primarily propane with some small amounts of methane and butanes ² heavy components have a carbon number> 20 | | | | | |

### EXAMPLE 2

A crude vegetable oil fraction (obtained from Cargill) was processed by placing 50 gm of Amberlyst™-15 into a 100 cc column. To this there were added 25 gm of the Cargill crude vegetable oil. This was followed by an additional 50 gm of crude. The treated solution and feed solution were analyzed for net content and the results are shown in Table 2.

**Table 2**

| Metal Content of Untreated and Treated Vegetable Oil | | |
|---|---|---|
| Metal | Untreated (ppm) | Treated (ppm) |
| Ca | 73 | 27.1 |
| Fe | 1.6 | 0.6 |
| Mg | 64.9 | 20.1 |
| Na | 3.1 | 2.1 |
| P | 653 | 161 |
| K | 407 | 99.1 |

## Claims

1. A process for producing a hydrocarbon fraction useful as a diesel fuel from a biorenewable feedstock comprising pre-treating the feedstock in a pretreatment zone at pretreatment conditions to remove at least a portion of contaminants in the feedstock and produce a first effluent stream; treating the first effluent stream in a reaction zone by hydrogenating and deoxygenating the first effluent stream at reaction conditions to provide a reaction product comprising a hydrocarbon fraction comprising n-paraffins useful as a diesel fuel.

2. The process of claim 1 further comprising isomerizing the reaction product by contacting it with an isomerization catalyst at isomerization conditions to isomerize at least a portion of the n-paraffins to iso-paraffins.

3. The process of claim 1 or 2 where the pretreatment step comprises contacting the feedstock with an acidic ion exchange resin.

4. The process of claim 1 or 2 where the pretreatment step comprises contacting the feedstock with an acid solution.

5. The process of any one of the preceding claims where the first effluent is hydrogenated by contacting the first effluent with a hydrogenation catalyst at a temperature of 200°C to 300°C and a hydrogen partial pressure of 3447 kPa to 6895 kPa.

6. The process of any one of the preceding claims where deoxygenation comprises at least one of decarboxylation and hydro-deoxygenation.
